# EUROPEAN PATENT APPLICATION

(11) **EP 2 141 372 A1**
(43) Date of publication of application: **06.01.2010**
(21) Application number: 07792078.3
(22) Date of filing: 07.08.2007
(51) Int. Cl.: F16C 3/20, F16C 3/10, F16F 15/26

(54) **CRANKSHAFT FOR AUTOMOBILE ENGINE**

(30) Priority: 26.04.2007 JP 2007003023 U
(71) Applicant: Kondo Kousakusho Co., Ltd., Anjo-shi, Aichi 4460001 (JP)
(72) Inventor: KONDO, Yoshiharu, Toyota-shi Aichi 470-1206 (JP)
(74) Representative: Hano, Christian
(86) International application number: PCT/JP2007/065409
(87) International publication number: WO 2008/136137

(57) **Abstract**

[PROBLEM] To provide an automobile engine crankshaft that affords further weight reduction of an arm formed integrally with a balancer. [SOLVING MEANS] The automobile engine crankshaft of the present invention constitutes a structure in which a hollow shaft-shaped journal (15) and pin (14), and an arm (10) formed integrally with a balancer (11) are individually manufactured, and in which ring-shaped bearings are assembled on each of the journal (15) and the pin (14). When the journal (15) is positioned directly above the pin (14), the balancer (11) integral to the arm (10) describes a sector shape that delineates a circular arc having the axial center of the journal (15) as its center and a proximate region of the axial center of the journal (15) in the horizontal direction as its base, wherein an outer edge portion (11a) of the balancer is thickly formed and a portion thereof nearer to the journal (15) is thinned to form a recess portion (11b), and a lower end portion of the arm (10)

## Description

### TECHNICAL FIELD

The present invention relates to a crankshaft used in an automobile engine.

### BACKGROUND ART

An automobile engine crankshaft is a component part used to convert reciprocating motion into rotary motion, and is constituted of a journal (main shaft), a pin to which a piston is connected via a connecting rod, an arm for linking the journal and the pin, and a balancer which is integrally formed with the arm.
The crankshaft is an essential component part of an engine for which quality, durability, and of course lightness of weight, are sought. While small crankshafts are able to be formed by forging, the journal, pin and arm are normally forged integrally in a forging mold.

A problem inherent in crankshafts having an integrated structure manufactured in this way resides in the need for the bearings that are externally fitted on the journal and the pin to be produced in a two-part structure which results not only in increased manufacturing costs as well as the increased weight of the structure, but also gives rise to an increase in the sliding resistance of the sliding surface between the shaft and the bearings and, in turn, a drop in traveling performance and also in fuel consumption.
With the foregoing conditions in mind, the applicant has previously proposed a crankshaft (patent reference 1) constituted of an individually premanufactured journal, pin and arm which, subsequent to the ring-shaped bearings being assembled on the journal and the pin, is fixed to the arm.

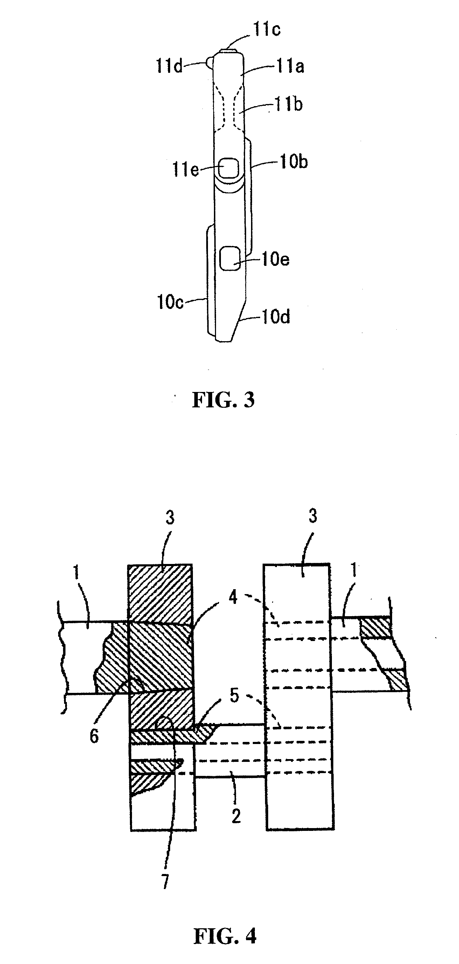

As shown in FIG. 4, the journal 1 and the pin 2 of this crankshaft are formed as hollow shafts, and connection shafts 4, 5 are provided to extend from the shaft ends thereof. In addition, an arm 3 in which a balancer is integrally formed comprises fitting holes 6, 7 formed in its conical surface into which the connection shafts 4, 5 are fitted. In addition, this assembly involves external fitting of ring-shaped bearings on the journal 1 and the pin 2, and fastening of the connection shafts 4, 5 in the fitting holes 6, 7 by shrink fitting.

Patent Reference 1: Japanese Registered Utility Model No. 3129273

### DISCLOSURE OF THE INVENTION

### Problems to be Solved by the Invention

Notably, because the effects afforded by a reduction in weight of an automobile engine crankshaft include increased engine rotation speed and increased engine output as well as a reduction in fuel consumption, even small reductions in the weight of a crankshaft are sought.
A reduction in the outer dimension of the rotation of the arm about the axial center of the journal affords the additional effect of a reduction in size of the engine itself.
Although the crankshaft disclosed in patent reference 1 constitutes a quality crankshaft in which a reduction in weight is achieved as a result of the journal 1 and the pin 2 being formed as hollow shafts and the arm being precision-formed by mold forging, a further reduction in the weight of this crankshaft is desirable.

Thereupon, it is an object of the present invention to provide an automobile engine crankshaft that affords a further weight reduction of an arm formed integrally with a balancer.

### Means to Solve the Problems

The following means is adopted for the automobile engine crankshaft of the present invention in order to achieve the aforementioned object. That is to say, the present invention constitutes an automobile engine crankshaft of a structure constituted by fastening a hollow shaft-shaped journal and pin on which ring-shaped bearings are externally fitted to an arm formed integrally with a balancer, **characterized in that** when the journal is positioned directly above the pin, the balancer integral to the arm describes a sector shape that delineates a circular arc having the axial center of the journal as its center and a proximate region of the axial center of the journal in the horizontal direction as its base, wherein an outer edge portion of the balancer is thickly formed and a portion thereof nearer to the journal is thinned to form a recess portion.

The present invention has application as a crankshaft in which the journal, the pin and the arm are individually manufactured and then fastened. The journal and pin should preferably be manufactured from a pipe material. In addition, immediately following hot forging, the arm is subject to coining and trimming to improve its dimensional precision, and it is preferable for the machining thereof using a machine tool to be as far as possible avoided.

The arm is set in such a way as to fit in its entirety within a fixed circle about the axial center of the journal (claim 2), the fixed circle being as small as possible. For this purpose, the outer edge portion of the balancer is thickly formed and the portion thereof toward the journal is thinly formed and, as a result, the center of gravity position of the balancer is as far as possible away from the axial center of the journal. This affords an increase in the centrifugal force during rotation and, as a result, the diameter of the balancer is able to be reduced by an amount equivalent thereto. Notably, in order to alleviate the concentration of stresses from the thickly formed portion onto the thinly formed portion, the thickly formed and thinly formed portions should describe a continuous curved surface or incline.

Incidentally, the balancer is designed to maintain the rotational balance of the crankshaft and, because its weight is set in such a way as to balance the weight of the members on the pin side, the weight of the balancer is able to be reduced to the extent that the weight of the pin and the arm on the pin side is able to be reduced.
Accordingly, apart from the use of a hollow pin, the arm of the rear surface side portion of this pin should be formed as a diagonally planed shape as described in claim 3.

### Effect of the Invention

According to the automobile engine crankshaft of the present invention, when the arm is positioned directly above the journal and pin, because the balancer describes a sector shape that delineates a circular arc having the axial center of the journal as its center and a proximate region of the axial center of the journal in the horizontal direction as its base, and the outer edge portion of the balancer is thickly formed and a portion thereof nearer to the journal is thinly formed, the center of gravity position of the balancer is separated from the axial center of the balancer, and the weight of the balancer is able to be reduced. In addition, the outer diameter about the axial center of the journal is able to be reduced.

In addition, when the shape of the lower end portion of the arm is set in such a way as to inscribe the circle of the arc delineated by the balancer about the axial center of the journal (claim 2), a crankshaft of good balance and reduced size is able to be produced.
In addition, provided the rear surface portion of the pin fixing portion of the arm is formed as a diagonally planed shape (claim 3), the weight of the balancer can be reduced by an amount correspondent thereto and, in turn, the weight of the arm is able to be further reduced.

### BRIEF DESCRIPTION OF THE DRAWINGS

[FIG. 1] is a partial front view of an embodiment of the automobile engine crankshaft of the present invention;
[FIG. 2] is a front view of the specifics of the arm of the automobile engine crankshaft of the present invention;
[FIG. 3] is a side view of the automobile engine crankshaft of the present invention; and
[FIG. 4] is a partial front view of a conventional crankshaft.

### Explanation of Symbols

- 1: Journal
- 2: Pin
- 3: Arm
- 4, 5: Connection shafts
- 6, 7: Fitting holes
- 10: Arm
- 10a: Arm body
- 10b, 10c: Boss portion
- 10d: Lower-end portion
- 10e: Boss
- 11: Balancer
- 11a: Outer edge portion
- 11b: Recess portion
- 11c, 11d, 11e,: Boss
- 14: Pin
- 15: Journal

### BEST MODE FOR CARRYING OUT THE INVENTION

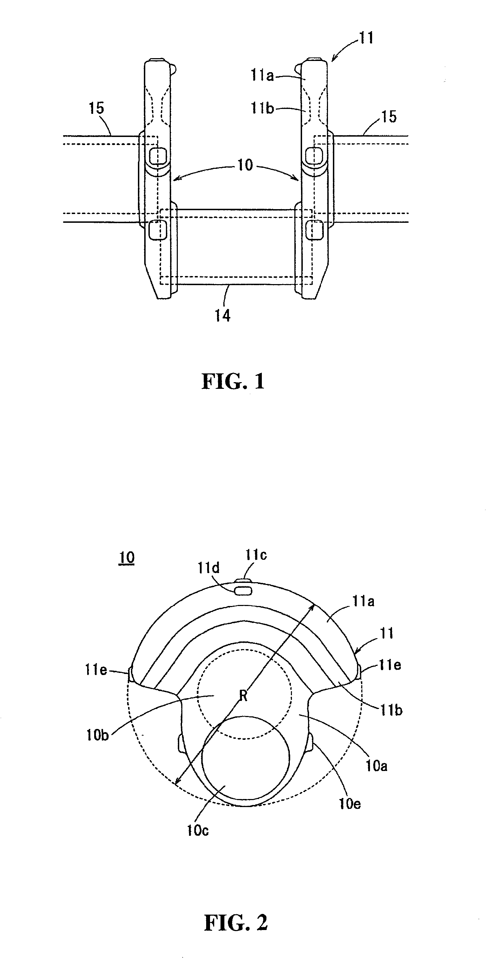

An embodiment of the present invention will be hereinafter described with reference to FIGS. 1 to 3.
FIG. 1 is a schematic front view of the configuration of the crankshaft according to the present invention, and FIG. 2 and FIG. 3 are a side view and a front view of the arm thereof.
As shown in FIG. 1, the crankshaft is assembled by fastening a journal (main shaft) 15 and a pin 14 having respective axial centers disposed in a stepped arrangement to an arm 10 formed integrally with a balancer 11. Notably, in this assembly, ring-shaped bearings are externally fitted in advance on the journal 15 and the pin 14.
The journal 15 and the pin 14 are easily manufactured from a steel pipe.

As shown in FIGS. 2 and 3, the arm body 10a and balancer 11 of the arm 10 are integrally formed and, when the pin 14 is positioned downward with respect to the journal 15 and the balancer 11 is positioned thereabove, a shape resembling the face of a girl with hair tied in the style of a Japanese woman of the Edo period is established.
As far as the overall size of the arm is concerned, it fits within a circle of radius R (150mm) about the axial center of the journal 15, and it is 16mm thick.

The balancer 11 is formed as an approximately 150° sector shape, and the base of the sector shape is delineated by the axial center line in the horizontal direction of the journal 15. In addition, an outer edge portion 11a of the sector shape has an approximately 16mm square cross-section, while the inner side (from the journal 15) thereof is recessed at its top and bottom and thinly formed as a recess portion 11b of 5mm thickness. Notably, the recess portion 11b connects with the outer edge portion 11a at an incline angle of approximately 30°.

The arm body 10a describes a shape defined by a curved line that connects from the center of the pin 14 to the circular arc of radius 30mm and the base of the aforementioned sector-shaped balancer 11, and the lower end portion thereof inscribes the 150mm circle delineated by the circular arc of the outer edge portion 11a of the balancer 11.
In addition, the lower end portion 10d of the rear surface (rear side of the pin 14) describes a shape that affords a reduction in weight obtained by diagonally planing around 20mm therefrom.
In addition, boss portions 10b, 10c of a thickness of the order of 3.5mm are formed on the surface to which the journal 15 and pin 14 are fixed. Notably, the journal 15 is fixed to the rear surface side of FIG. 2.

While bosses 11c, 11d, 11e are additionally provided in the upper end portion, the front surface portion of the upper end, and the left and right end portions respectively of the balancer 11, and a boss 10e is additionally provided in the left and right ends of the arm body 10a, these serve as a lubricating oil passage or for stamping an ID stamp or the like.
Immediately following hot forging, the arm 10 is placed in a hermetically sealed mold where it is subject to coining and then trimming. As a result, because the undulating shape of the molding surface of the mold is able to be efficiently and accurately transferred, high dimensional precision can be achieved.
Ring-shaped bearings (not shown in the drawings) are externally fitted from the shaft ends of the journal 15 and the pin 14, and each is then fitted on and welded to the bosses 10b, 10c.

Notably, while the dimensions of the arm are specifically described in the description of the embodiment given above to ensure the particulars of the invention are able to be better understood, the dimensions of the arm are obviously not limited thereto.

## Claims

1. An automobile engine crankshaft of a structure constituted by fastening a hollow shaft-shaped journal and pin on which ring-shaped bearings are externally fitted to an arm formed integrally with a balancer, **characterized in that** when the journal is positioned directly above the pin, the balancer integral to the arm describes a sector shape that delineates a circular arc having the axial center of the journal as its center and a proximate region of the axial center of the journal in the horizontal direction as its base, wherein an outer edge portion of the balancer is thickly formed and a portion thereof nearer to the journal is thinned to form a recess portion.

2. The automobile crankshaft as claimed in claim 1, **characterized in that** a lower end portion of said arm inscribes a circle delineated by the circular arc of the outer edge of the balancer about the axial center of said journal.

3. The automobile crankshaft as claimed in claim 1, **characterized in that** the lower end portion of said arm is formed in a shape obtained by diagonally planing a rear-surface side portion of the pin.
